# FASCICULE DE BREVET EUROPEEN

(11) **EP 4 291 943 B1**
(45) Date de publication et mention de la délivrance du brevet: **06.08.2025**
(21) Numéro de dépôt: 22704385.8
(22) Date de dépôt: 09.02.2022
(51) Int. Cl.: G02B 27/14

(54) **SYSTÈME ET PROCÉDÉ D'OBSERVATION**
BEOBACHTUNGSSYSTEM UND -VERFAHREN
OBSERVATION SYSTEM AND METHOD

(30) Priorité: 10.02.2021 FR 2101278
(43) Date de publication de la demande: 20.12.2023
(73) Titulaire: Bertin Technologies, 78180 Montigny-le-Bretonneux (FR)
(72) Inventeur: GRASSER, Régis, 13100 AIX EN PROVENCE (FR); SOULIÉ, Emmanuel, 13790 ROUSSET (FR)
(74) Mandataire: Hautier IP
(86) Numéro de dépôt international: PCT/EP2022/053133
(87) Numéro de publication internationale: WO 2022/171674

(56) Documents cités:
- EP-A2- 2 416 201
- WO-A1-2007/044582
- WO-A1-2019/097522
- US-A1- 2015 377 587

## Description

### DOMAINE TECHNIQUE DE L'INVENTION

L'invention concerne l'observation d'une scène, et plus particulièrement une observation à l'aide d'un système portatif.

### ETAT DE LA TECHNIQUE

Actuellement, il existe des systèmes monoculaires, ou des jumelles, utilisés pour observer des scènes. Ces systèmes peuvent être purement optiques, c'est-à-dire qu'ils comprennent des voies d'observation directe, par exemple des jumelles équipées d'objectifs pour observer de manière grossissante une scène éloignée. D'autres systèmes, par exemple les appareils photo numériques, comprennent à la fois une voie d'observation directe et une voie d'observation numérique, c'est-à-dire une voie utilisant un capteur numérique pour élaborer une image numérique de la scène observée. Mais ces systèmes ne permettent pas d'observer efficacement une scène de nuit.

Certains systèmes permettent de visualiser une scène de nuit, on peut citer la demande de brevet américain US 2015/0377587 qui divulgue un système de vision de nuit comprenant une caméra vidéo du type infrarouge, un oculaire pour observer l'image vidéo et un dispositif optique équipé d'un séparateur optique pour réfléchir une partie de l'image vidéo vers l'oculaire et pour transmettre une image optique issue d'une scène à observer. Le dispositif comporte un atténuateur optique qui peut varier entre un mode transparent pour utiliser le système en vision de jour et un mode opaque pour utiliser le système en vision de nuit en empêchant la lumière de sortir du dispositif optique afin d'opérer de nuit en toute discrétion. Mais ce système n'est pas adapté pour optimiser l'image observée par un utilisateur pour une utilisation du système en vison de jour comme de nuit. Les documents EP 2 416 201 A2, WO 2019/097522 A1, et WO 2007/044582 A1 constituent de l'art antérieur pour la présente invention.

### RESUME DE L'INVENTION

Un objet consiste à pallier ces inconvénients, et plus particulièrement à fournir des moyens pour améliorer l'observation d'une scène en vision de jour comme de nuit.

Un autre objet consiste à fournir des moyens d'observation pour minimiser la consommation d'énergie.

Selon un aspect, il est proposé un système d'observation, comprenant une première voie optique apte à recevoir un premier rayonnement optique émis par une scène à observer et comportant un capteur principal configuré pour élaborer une première image numérique à partir du premier rayonnement optique ; une deuxième voie optique apte à recevoir un deuxième rayonnement optique issu de la scène à observer et comportant un atténuateur optique à opacité variable apte à modifier une intensité lumineuse du deuxième rayonnement optique ; un afficheur configuré pour afficher une deuxième image numérique à partir de la première image numérique ; et une troisième voie optique couplée à l'afficheur et à l'atténuateur optique et conformée pour observer la deuxième image numérique et un troisième rayonnement optique transmis par l'atténuateur optique.

Le système comporte une unité de commande électronique comportant une unité de traitement d'images configurée pour déterminer une intensité lumineuse d'au moins un pixel de la première image numérique et en ce que l'unité de commande électronique est configurée pour commander une variation de l'opacité de l'atténuateur optique à partir de l'intensité lumineuse déterminée.

Ainsi, on fournit un système qui améliore l'observation d'une scène. En particulier, on fournit un système automatisé qui tient compte de l'intensité lumineuse du rayonnement optique émis par la scène pour améliorer l'observation. Un tel système est particulièrement adapté pour une observation simultanée d'une scène à l'aide de deux voies optiques. Il permet en outre d'optimiser l'observation de la scène dans des conditions intermédiaires entre une vision de jour et une vision de nuit pour lesquelles l'information de la scène est partagée entre les deux voies optiques.

Selon un mode de réalisation, l'atténuateur optique comporte au moins une cellule à cristaux liquides.

Selon un autre mode de réalisation, l'atténuateur optique comporte au moins une cellule électrochrome.

Selon un mode de réalisation, l'atténuateur optique est configuré pour transmettre par transparence le troisième rayonnement optique.

Selon un autre mode de réalisation, l'atténuateur optique est configuré pour transmettre par réflexion le troisième rayonnement optique.

L'unité de commande électronique peut être configurée pour commander une augmentation de l'opacité de l'atténuateur optique lorsque l'intensité lumineuse dudit au moins un pixel est supérieure ou égale à un seuil.

Le système peut comprendre une quatrième voie optique apte à recevoir un quatrième rayonnement optique émis par la scène et comportant un capteur supplémentaire configuré pour élaborer une troisième image numérique à partir du quatrième rayonnement optique; l'unité de traitement d'images étant configurée pour élaborer la deuxième image numérique à partir d'une fusion entre les première et troisième images numériques.

La première voie optique peut comprendre un élément optique configuré pour transmettre une première partie du premier rayonnement optique vers le premier capteur et pour transmettre une deuxième partie du premier rayonnement optique correspondant au deuxième rayonnement optique vers l'atténuateur optique.

Le système peut en outre comprendre un ensemble optique comportant l'élément optique et l'atténuateur optique, l'ensemble optique étant monobloc.

Selon un autre aspect, il est proposé un procédé d'observation, comprenant une réception d'un premier rayonnement optique émis par une scène à observer à partir d'une première voie optique munie d'un capteur principal élaborant une première image numérique à partir du premier rayonnement optique ; une réception d'un deuxième rayonnement optique issu de la scène à observer à partir d'une deuxième voie optique munie d'un atténuateur optique à opacité variable apte à modifier une intensité lumineuse du deuxième rayonnement optique ; un affichage d'une deuxième image numérique à partir de la première image numérique ; et une observation à partir d'une troisième voie optique d'un troisième rayonnement optique transmis par l'atténuateur optique et de la deuxième image numérique.

Le procédé comporte une détermination d'une intensité lumineuse d'au moins un pixel de la première image numérique et une variation de l'opacité de l'atténuateur optique à partir de l'intensité lumineuse déterminée.

### BRÈVE DESCRIPTION DE LA FIGURE

D'autres avantages et caractéristiques ressortiront plus clairement de la description qui va suivre de modes particuliers de réalisation et de mise en œuvre de l'invention donnés à titre d'exemples non limitatifs et représentés au dessin annexé, dans lequel :

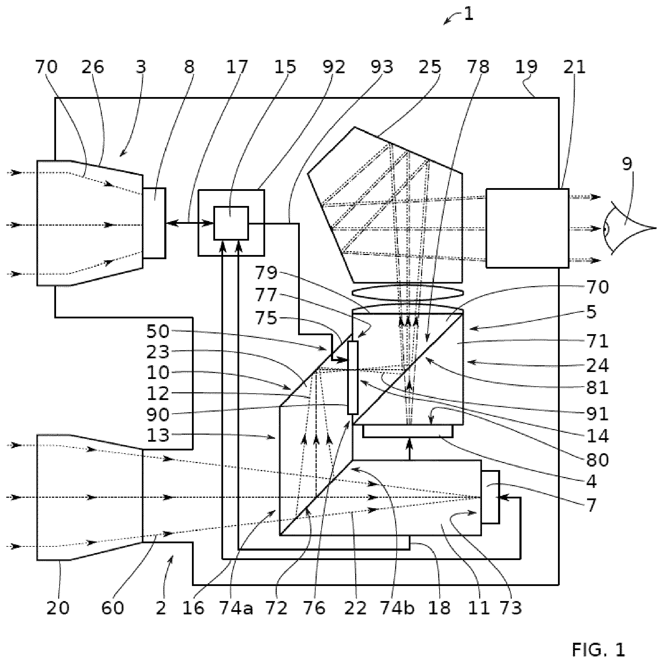

[Fig.1] la figure 1, illustre schématiquement un mode de réalisation d'un système d'observation selon l'invention.

Le dessin est donné à titre d'exemple et n'est pas limitatif de l'invention. Il constitue une représentation schématique de principe destinée à faciliter la compréhension de l'invention et n'est pas nécessairement à l'échelle des applications pratiques.

### DESCRIPTION DÉTAILLÉE

Sur la figure 1, on a représenté un système d'observation 1 d'une scène. De manière générale, le système 1 comprend une première voie optique 2, une deuxième voie optique 10, un afficheur 4 et une troisième voie optique 5 couplée à l'afficheur 4. Avantageusement, le système d'observation 1 est portatif, c'est-à-dire qui peut être transporté à la main par un utilisateur. En outre, la première voie optique 2 est apte à recevoir un premier rayonnement optique 60 émis par la scène à observer, cette dernière n'étant pas représentée sur les figures à des fins de simplification. On entend par rayonnement optique, un rayonnement électromagnétique comprenant les domaines de l'ultraviolet, du visible et de l'infrarouge. La scène à observer peut être située à l'extérieur, comme à l'intérieur d'un bâtiment, et le système 1 est particulièrement adapté pour observer la scène de jour comme de nuit. La première voie optique 2 comporte un premier capteur 7, noté capteur principal, configuré pour élaborer une première image numérique à partir du premier rayonnement optique 60. Le premier capteur 7 est un dispositif électronique, il est alimenté par une batterie, non représentée sur les figures à des fins de simplification. L'afficheur 4 est configuré pour afficher au moins la première image numérique issue du premier capteur 7. En particulier, l'afficheur 4 est configuré pour afficher une deuxième image numérique à partir de la première image numérique. L'afficheur 4 est alimenté par la batterie. Par exemple, la première voie optique 2 peut être une voie d'observation numérique de jour, c'est-à-dire que le premier capteur 7 est sensible à la lumière visible par un œil de l'utilisateur 9. Selon un autre mode de réalisation, la première voie optique 2 est une voie d'observation numérique de nuit, c'est-à-dire que le premier capteur 7 est sensible à une lumière infrarouge, par exemple une lumière dont la longueur d'onde est supérieure ou égale à 700 nm.

La deuxième voie optique 10 est apte à recevoir un deuxième rayonnement optique 12 issu de la scène à observer et comporte un atténuateur optique 90 à opacité variable. C'est-à-dire que l'atténuateur optique 90 est apte à modifier une intensité lumineuse du deuxième rayonnement optique 12. Le deuxième rayonnement optique 12 peut être émis par la scène, et dans ce cas, la deuxième voie optique 10 reçoit directement le deuxième rayonnement optique 12. En variante, comme illustré sur la figure 1, la deuxième voie optique 10 relie les première et troisième voies optiques 2, 5. Selon cette variante, le deuxième rayonnement optique 12 correspond à une partie du premier rayonnement optique 60. Dans ce cas, la deuxième voie optique 10 reçoit indirectement le premier rayonnement optique 60.

Par ailleurs, la troisième voie optique 5 est couplée à l'atténuateur optique 90 et est conformée pour observer la deuxième image numérique affichée par l'afficheur 4 et un troisième rayonnement optique 91 transmis par l'atténuateur optique 90.

Le système 1 comporte en outre une unité de commande électronique 92, par exemple un microprocesseur, comprenant une unité de traitement d'images 15 configurée pour déterminer une intensité lumineuse d'au moins un pixel de la première image numérique. L'unité de traitement d'images 15 est un microprocesseur spécifique intégré au sein de l'unité de commande électronique 92 et apte à effectuer des calculs sur l'image numérique issue du capteur principal 7. Par exemple, l'unité de traitement d'images 15 est apte à effectuer les étapes d'algorithmes de traitement d'images. L'unité de commande électronique 92 est couplée à l'atténuateur 4 par une connexion 93. L'unité de commande électronique 92 est en outre configurée pour commander une variation de l'opacité de l'atténuateur optique 90. Par exemple, l'atténuateur optique 90 comporte une ou plusieurs cellules à cristaux liquides. En variante, l'atténuateur optique 90 comporte une ou plusieurs cellules électrochromes. L'atténuateur optique 90 reçoit un courant électrique, par la connexion 93, délivré par l'unité de commande électronique 92. L'opacité de l'atténuateur 90 varie en fonction de la valeur du courant électrique reçu. Plus particulièrement, l'unité de commande électronique 92 modifie l'opacité de l'atténuateur 90 à partir de l'intensité lumineuse déterminée par l'unité de traitement d'images 15.

Avantageusement, le système 1 comporte une quatrième voie optique 3. La quatrième voie optique 3 est apte à recevoir un quatrième rayonnement optique 70 émis par la scène à observer et comporte un deuxième capteur 8 configuré pour élaborer une troisième image numérique à partir du quatrième rayonnement optique 70. Le deuxième capteur 8 est distinct du premier capteur 7, et est également noté capteur supplémentaire. Les première et quatrième voies optiques 2, 3 sont également considérées comme des voies d'observation numérique car elles comportent chacune un capteur numérique 7, 8 configuré pour élaborer une image numérique. Les première et quatrième voies optiques 2, 3 sont également notées première et deuxième voies numériques. Le deuxième capteur 8 est également alimenté par la batterie.

L'unité de traitement d'images 15 est en outre configurée pour élaborer la deuxième image numérique à partir des première et troisième images numériques issues respectivement des premier et deuxième capteurs 7, 8. Par exemple, la deuxième image est élaborée à partir d'une fusion numérique entre les première et troisième images numériques. L'unité de traitement d'images15 est couplée, au premier capteur 7 par une connexion 16, et au deuxième capteur 8 par une connexion 17. En outre, l'unité de traitement d'images 15 est couplée à l'afficheur 4, par une connexion 18, pour transmettre la deuxième image numérique à l'afficheur 4. L'afficheur 4 est en outre configuré pour afficher la deuxième image numérique à partir des première et troisième images numériques issues respectivement des premier et deuxième capteurs 7, 8.

De préférence, le premier capteur 7 est sensible à la lumière visible par un œil de l'utilisateur 9, pour une vision de jour, et le deuxième capteur 8 est sensible à une lumière infrarouge, pour une vision de nuit. Avantageusement, l'unité de commande électronique 92 est configurée pour commander une augmentation de l'opacité de l'atténuateur 90 lorsque l'intensité lumineuse d'au moins un pixel de la première image numérique est supérieure ou égale à un premier seuil. Ainsi on peut éviter le phénomène d'éblouissement, par exemple créé par le soleil, en vision de jour. L'unité de traitement d'images 15 est également configurée pour déterminer une intensité lumineuse d'au moins un pixel de la troisième image numérique. En outre, l'unité de commande électronique 92 est configurée pour commander une augmentation de l'opacité de l'atténuateur 90 lorsque l'intensité lumineuse d'au moins un pixel de la troisième image numérique est supérieure ou égale à un deuxième seuil. Ainsi on peut éviter le phénomène d'éblouissement local, par exemple créé par un luminaire d'une zone urbaine en vision de nuit.

L'unité de traitement d'images 15 est également configurée pour déterminer les intensités lumineuses de chacun des pixels des première et troisième images numériques issues respectivement des premier et deuxième capteurs 7, 8. En outre, l'unité de commande électronique 92 commande une diminution de l'opacité de l'atténuateur lorsque les intensités lumineuses des pixels des première et troisième images numériques sont inférieures aux premier et deuxième seuils. Lorsque la batterie n'alimente plus le système d'observation 1, l'atténuateur 90 a une valeur d'opacité par défaut correspondant à une transmission ou une réflexion maximale. Par exemple, l'opacité de l'atténuateur 90 peut être nulle en l'absence d'alimentation. Ceci permet d'assurer une observation par la deuxième voie optique 10 en l'absence de source d'énergie.

Par ailleurs, l'unité de commande électronique 92 peut être configurée pour commander une variation de l'opacité de l'atténuateur 90 selon une fonction continue suivant une loi de commande analogique, linéaire ou continue par morceaux, par exemple une fonction logarithmique. Selon une variante, l'unité de commande électronique 92 peut être configurée pour commander une variation de l'opacité de l'atténuateur 90 selon une fonction discrète suivant une loi de commande numérique, c'est-à-dire à plusieurs paliers ou niveaux d'opacité, de préférence à au moins trois paliers, par exemple à 128, 256 ou 512 paliers. De manière générale, l'unité de commande électronique 92 transmet une commande, par exemple sous la forme d'une tension en volts, à l'atténuateur 90. La commande en volts ainsi transmise peut suivre une fonction continue ou discrète telle que définie ci-avant.

Avantageusement, la première voie optique 2 comporte en outre un élément optique 11 configuré pour transmettre la partie 12 du premier rayonnement optique 60 vers la deuxième voie optique 10. Par exemple, l'élément optique 11 transmet la partie 12 du premier rayonnement optique 60 vers la deuxième voie optique 10, tandis qu'une autre partie 22 du premier rayonnement optique 60 est dirigée vers le premier capteur 7. On entend par élément optique 11, un élément permettant de modifier la trajectoire d'un rayonnement optique ou les propriétés du rayonnement optique, tels qu'un miroir, une lentille, un réseau de diffraction, un prisme, etc. De préférence, l'élément optique 11 est un séparateur optique, par exemple un miroir semi-réfléchissant, c'est-à-dire un élément optique permettant de transmettre une partie de la lumière et de réfléchir le reste. En d'autres termes lorsque l'élément optique 11 est un séparateur optique, il permet de transmettre la partie 12 du premier rayonnement optique 60 vers la deuxième voie optique 10 et l'autre partie 22 du premier rayonnement optique 60 vers le premier capteur 7. L'élément optique 11 peut être un prisme ayant un dioptre d'entrée 72 semi-réfléchissant. On entend par prisme, un bloc de verre taillé comprenant au moins cinq faces, ou dioptres. La deuxième voie optique 10 permet une observation directe de la scène par l'utilisateur. On l'appelle également voie directe optique. En d'autres termes, la deuxième voie optique 10 ne comporte ni un dispositif électronique configuré pour transformer les photons en électrons, tel un dispositif d'amplification, ni un capteur électronique transformant un rayonnement lumineux en image numérique.

Avantageusement, le système 1 comporte un ensemble optique 13 comprenant au moins l'élément optique 11. Avantageusement, l'ensemble optique 13 peut en outre comprendre d'autres éléments optiques. Ces autres éléments optiques sont notés systèmes optiques 23, 24. L'élément optique 11 et les systèmes optiques 23, 24 peuvent être des prismes et l'ensemble optique 13 est alors un ensemble prismatique, c'est-à-dire un ensemble de prismes. L'ensemble optique 13 est une structure particulièrement simple et rigide et permet de simplifier tout en allégeant le système d'observation 1.

Sur la figure 1, on a représenté un mode de réalisation de l'ensemble optique 13. L'ensemble optique 13 comporte l'élément optique 11, un premier système optique 23 couplé à l'élément optique 11, et un deuxième système optique 24 couplé au premier système optique 23. De façon générale, on entend par deux éléments couplés entre eux, deux éléments qui sont en contact l'un avec l'autre. Ils peuvent être montés fixes entre eux, ou être montés de manière amovible. Dans ce mode de réalisation, l'élément optique 11 et le premier système optique 23 sont respectivement deux prismes et le deuxième système optique 24 comporte deux prismes 70, 71.

L'élément optique 11 comporte le dioptre d'entrée 72 et un dioptre de sortie 73. Le dioptre de sortie 73 est un dioptre neutre couplé au premier capteur 7. On entend par dioptre neutre, un dioptre transparent qui laisse passer les rayonnements optiques. Le dioptre d'entrée 72 est un miroir semi-réfléchissant pour transmettre une première partie 12 du premier rayonnement 60 vers la deuxième voie optique 10 et une deuxième partie 22 du premier rayonnement 60 vers le premier capteur 7, via le dioptre de sortie 73. Dans ce mode de réalisation, la première partie 12 du premier rayonnement optique 60 est transmise, par réflexion, vers la deuxième voie optique 10. Le premier système optique 23 est configuré pour transmettre la première partie 12 du premier rayonnement optique 60 de la deuxième voie optique 10 vers la troisième voie optique 5. Le premier système optique 23 comporte un premier dioptre d'entrée 74a neutre pour recevoir le premier rayonnement 60, un deuxième dioptre d'entrée 74b neutre couplé au dioptre d'entrée 72 de l'élément optique 11 pour recevoir la première partie 12 du rayonnement. Par ailleurs, le premier système optique 23 comporte un dioptre de sortie 76 neutre et un dioptre intermédiaire 75 réfléchissant la première partie 12 de rayonnement pour la transmettre à la troisième voie optique 5, via le dioptre de sortie 76. Le deuxième système optique 24 a pour rôle d'établir une fusion optique entre la deuxième image numérique et le troisième rayonnement optique 91 transmis par l'atténuateur 90. En d'autres termes, le deuxième système optique 24 est configuré pour transmettre le troisième rayonnement optique 91 vers l'oculaire 21 et pour transmettre la deuxième image numérique issue de l'afficheur 4 vers l'oculaire 21. L'atténuateur 90 peut être monté fixe sur le dioptre de sortie 76 du premier système optique 23, et transmettre le troisième rayonnement optique 91 par transparence. En variante, l'atténuateur 90 peut être monté fixe sur le dioptre intermédiaire 75 du premier système optique 23, et transmettre le troisième rayonnement optique 91 par réflexion.

Le deuxième système optique 24 est un séparateur optique. Il comporte un premier prisme 70 ayant un dioptre d'entrée 77 neutre couplé au dioptre de sortie 76 du premier système optique 23, un dioptre intermédiaire 78 semi-réfléchissant pour transmettre une partie du troisième rayonnement optique 91 vers un dioptre de sortie 79, neutre, correspondant à un dioptre de sortie de l'ensemble optique 13. Ce dioptre de sortie 79 transmet les rayonnements optiques issus de la scène à observer et de la deuxième image numérique vers l'oculaire 21, afin de pouvoir observer la scène et la deuxième image numérique.

En outre, le deuxième système optique 24 comporte un deuxième prisme 71 ayant un dioptre d'entrée 80 neutre couplé à l'afficheur 4 et un dioptre de sortie 81 neutre couplé au dioptre intermédiaire 78 du premier prisme 70. Ainsi, le deuxième prisme 71 permet de transmettre la deuxième image numérique vers le dioptre de sortie 79 de l'ensemble optique 13. La troisième voie optique 5 comprend le deuxième système optique 24 et permet d'observer la scène à partir du premier rayonnement optique 60 et la deuxième image numérique affichée par l'afficheur 4.

Avantageusement les prismes 11, 23, 70, 71 de l'ensemble optique 13 peuvent être collés entre eux pour former un ensemble optique 13 monobloc. Selon encore un autre avantage, d'autres éléments 4, 7, 14, 90 peuvent être montés fixes sur l'ensemble optique 13. Par ailleurs, lorsque des éléments 4, 7, 14, 90 sont montés fixes sur un ensemble optique 13 monobloc, l'ensemble optique 13 monobloc et les éléments 4, 7, 14, 90 fixés forment un ensemble monobloc 50. On entend par monobloc, un ensemble d'éléments fixés entre eux de sorte que le retrait d'un des éléments de l'ensemble entraîne une destruction mécanique de l'ensemble.

Ainsi, on fournit un ensemble monobloc 50 qui empêche un mouvement relatif entre les éléments de l'ensemble 50, qui peuvent avoir lieu, par exemple lors de chocs ou de vibrations. On dit également que l'ensemble monobloc 50 à un rôle d'invariant optique. Avantageusement, le premier capteur 7, l'afficheur 4, et l'atténuateur optique 90 sont montés fixes sur l'ensemble optique 13 monobloc. Cela permet de rendre robuste une harmonisation des première, deuxième et troisième voies optiques 2, 10, 5 à tous déplacements relatifs entre les différents éléments des voies optiques, en particulier les déplacements par rapport à un objectif 20 situé en entrée de la première voie optique 2 ou à un oculaire 21 situé en sortie de la troisième voie optique 5. La quatrième voie optique 3 peut être harmonisée avec un traitement numérique d'images avec la première voie numérique 2, selon des techniques de traitement d'images classiques. Ainsi, après l'harmonisation numérique des première et deuxième voies numériques 2, 3, l'ensemble monobloc 50 permet d'harmoniser les première et deuxième voies numériques 2, 3 avec les deuxième et troisième voies optiques 10, 5. L'ensemble monobloc 50 permet de superposer la deuxième image numérique, issue des première et troisièmes images numériques, à l'image de la scène issue de la deuxième voie optique 10, c'est-à-dire le troisième rayonnement optique 91, sans décalage entre les champs. La superposition d'images est également notée fusion optique. L'ensemble monobloc 50 permet une harmonisation robuste, en maintenant une harmonisation lors de chocs et de vibrations éventuels. En d'autres termes, l'ensemble monobloc 50 permet de minimiser le risque de désharmonisation.

Avantageusement, l'ensemble optique 13 peut comporter un réticule de visée 14. Plus particulièrement, la deuxième voie optique 10 comporte le réticule de visée 14. Par exemple, le réticule 14 est une figure déposée sur une surface d'un verre par sérigraphie ou photolithographie. Le réticule 14 peut également être fait de fils tendus. On peut ainsi superposer une figure sur l'image de la scène à observer. Le réticule de visée 14 peut être monté sur l'ensemble optique 13, de préférence de manière fixe pour faire alors partie de l'ensemble monobloc 50. Cela permet de rendre robuste l'harmonisation des première, deuxième et troisième voies optiques 2, 10, 5 avec le réticule de visée 14 à tous déplacements relatifs entre les différents éléments de ces voies optiques 2, 10, 5. Avantageusement, le réticule de visée 14 est monté fixe sur le dioptre de sortie 76 du premier système optique 23.

Le système d'observation 1 comporte, avantageusement, un boîtier 19 au sein duquel sont logés les capteurs 7, 8, l'élément optique 11, l'afficheur 4, l'atténuateur 90, l'ensemble optique 13 et le réticule 14, et la batterie. En outre, la première voie optique 2 peut comprendre l'objectif 20 monté sur le boîtier 19. La quatrième voie optique 3 peut comprendre également un objectif supplémentaire 26 monté sur le boîtier 19. L'oculaire 21 permet à l'utilisateur 9 d'observer la deuxième image issue de l'afficheur 4 et le troisième rayonnement optique 90 transmis par l'atténuateur 90. Avantageusement, en cas de mouvement relatif entre l'objectif 20 et l'ensemble monobloc 50, les première, deuxième et troisième voies optiques 2, 10 et 5, le réticule 14 et l'atténuateur 90 restent harmonisés les uns par rapport aux autres.

Un procédé d'observation peut être mis en œuvre par le système d'observation 1 défini ci-avant.

Le système et le procédé qui viennent d'être décrits sont particulièrement adaptés pour des systèmes monoculaires, ou du type jumelle, portatifs et pour une vision de jour comme de nuit. Le système permet d'améliorer l'observation d'une scène en vision de jour comme de nuit. Le système d'observation permet en outre de diminuer la taille des batteries, il est particulièrement léger. Il permet, en outre, d'éviter les décalages entre les champs des images, lors de chocs et de vibrations, et facilite l'observation des scènes lorsque l'utilisateur est en mouvement.

## Revendications

1. Système d'observation, comprenant une première voie optique (2) apte à recevoir un premier rayonnement optique (60) émis par une scène à observer et comportant un capteur principal (7) configuré pour élaborer une première image numérique à partir du premier rayonnement optique (60); une deuxième voie optique (10) apte à recevoir un deuxième rayonnement optique (12) issu de la scène à observer et comportant un atténuateur optique (90) à opacité variable apte à modifier une intensité lumineuse du deuxième rayonnement optique (12) ; un afficheur (4) configuré pour afficher une deuxième image numérique à partir de la première image numérique ; et une troisième voie optique (5) couplée à l'afficheur (4) et à l'atténuateur optique (90) et conformée pour observer la deuxième image numérique et un troisième rayonnement optique (91) transmis par l'atténuateur optique (90) ; **caractérisé en ce qu'**il comporte une unité de commande électronique (92) comportant une unité de traitement d'images (15) configurée pour déterminer une intensité lumineuse d'au moins un pixel de la première image numérique et **en ce que** l'unité de commande électronique (92) est configurée pour commander une variation de l'opacité de l'atténuateur optique (90) à partir de l'intensité lumineuse déterminée.

2. Système selon la revendication 1, dans lequel l'atténuateur optique (90) comporte au moins une cellule à cristaux liquides.

3. Système selon la revendication 1, dans lequel l'atténuateur optique (90) comporte au moins une cellule électrochrome.

4. Système selon l'une quelconque des revendications 1 à 3, dans lequel l'atténuateur optique (90) est configuré pour transmettre par transparence le troisième rayonnement optique (91).

5. Système selon l'une quelconque des revendications 1 à 3, dans lequel l'atténuateur optique est configuré pour transmettre par réflexion le troisième rayonnement optique (91).

6. Système selon l'une quelconque des revendications précédentes, dans lequel l'unité de commande électronique (92) est configurée pour commander une augmentation de l'opacité de l'atténuateur optique (90) lorsque l'intensité lumineuse dudit au moins un pixel est supérieure ou égale à un seuil.

7. Système selon l'une quelconque des revendications précédentes, comprenant une quatrième voie optique (3) apte à recevoir un quatrième rayonnement optique (70) émis par la scène et comportant un capteur supplémentaire (8) configuré pour élaborer une troisième image numérique à partir du quatrième rayonnement optique (70); l'unité de traitement d'images (15) étant configurée pour élaborer la deuxième image numérique à partir d'une fusion entre les première et troisième images numériques.

8. Système selon l'une quelconque des revendications précédentes, dans lequel la première voie optique (2) comprend un élément optique (11) configuré pour transmettre une première partie (22) du premier rayonnement optique (60) vers le premier capteur (7) et pour transmettre une deuxième partie (12) du premier rayonnement optique (60) correspondant au deuxième rayonnement optique (12) vers l'atténuateur optique (90).

9. Système selon la revendication 8, comprenant un ensemble optique (13) comportant l'élément optique (11) et l'atténuateur optique (90), l'ensemble optique (13) étant monobloc.

10. Procédé d'observation, comprenant une réception d'un premier rayonnement optique (60) émis par une scène à observer à partir d'une première voie optique (2) munie d'un capteur principal (7) élaborant une première image numérique à partir du premier rayonnement optique (60) ; une réception d'un deuxième rayonnement optique (12) issu de la scène à observer à partir d'une deuxième voie optique (10) munie d'un atténuateur optique (90) à opacité variable apte à modifier une intensité lumineuse du deuxième rayonnement optique (12) ; un affichage d'une deuxième image numérique à partir de la première image numérique ; et une observation à partir d'une troisième voie optique (5) d'un troisième rayonnement optique (91) transmis par l'atténuateur optique (90) et de la deuxième image numérique, **caractérisé en ce qu'**il comporte une détermination d'une intensité lumineuse d'au moins un pixel de la première image numérique et une variation de l'opacité de l'atténuateur optique (90) à partir de l'intensité lumineuse déterminée.

## Patentansprüche

1. Beobachtungssystem, umfassend einen ersten optischen Weg (2), der geeignet ist, eine erste optische Strahlung (60) zu empfangen, die von einer zu beobachtenden Szene ausgestrahlt wird, und einen Hauptsensor (7) aufweist, der so eingerichtet ist, dass er aus der ersten optischen Strahlung (60) ein erstes digitales Bild erstellt; einen zweiten optischen Weg (10), der geeignet ist, eine zweite optische Strahlung (12) aus der zu beobachtenden Szene zu empfangen und einen optischen Dimmer (90) mit variabler Trübung aufweist, der geeignet ist, eine Lichtintensität der zweiten optischen Strahlung (12) zu ändern; ein Anzeiger (4), der so eingerichtet ist, dass er ein zweites digitales Bild aus dem ersten digitalen Bild anzeigt; und einen dritten optischen Weg (5), der mit dem Anzeiger (4) und dem optischen Dimmer (90) gekoppelt und so ausgebildet ist, dass das zweite digitale Bild und eine dritte optische Strahlung (91) beobachtet werden, die vom optischen Dimmer (90) übertragen werden; **dadurch gekennzeichnet, dass** es eine elektronische Steuereinheit (92) aufweist, die eine Bildverarbeitungseinheit (15) aufweist, die so eingerichtet ist, dass sie eine Lichtintensität von mindestens einem Pixel des ersten digitalen Bildes bestimmt, und dass die elektronische Steuereinheit (92) so eingerichtet ist, dass sie eine Änderung der Trübung des optischen Dimmers (90) ausgehend von der bestimmten Lichtintensität steuert.

2. System nach Anspruch 1, wobei der optische Dimmer (90) mindestens eine Flüssigkristallzelle aufweist.

3. System nach Anspruch 1, wobei der optische Dimmer (90) mindestens eine elektrochrome Zelle aufweist.

4. System nach einem der Ansprüche 1 bis 3, wobei der optische Dimmer (90) so eingerichtet ist, dass er die dritte optische Strahlung (91) transparent überträgt.

5. System nach einem der Ansprüche 1 bis 3, wobei der optische Dimmer so eingerichtet ist, dass er die dritte optische Strahlung (91) reflektiert überträgt.

6. System nach einem der vorhergehenden Ansprüche, wobei die elektronische Steuereinheit (92) so eingerichtet ist, dass sie eine Erhöhung der Trübung des optischen Dimmers (90) steuert, wenn die Lichtintensität des mindestens einen Pixels größer oder gleich einem Schwellenwert ist.

7. System nach einem der vorhergehenden Ansprüche, das einen vierten optischen Weg (3) umfasst, der geeignet ist, eine vierte von der Szene ausgestrahlte optische Strahlung (70) zu empfangen, und einen zusätzlichen Sensor (8) aufweist, der so eingerichtet ist, dass er ein drittes digitales Bild aus der vierten optischen Strahlung (70) erstellt, wobei die Bildverarbeitungseinheit (15) so eingerichtet ist, dass sie das zweite digitale Bild aus einer Fusion zwischen dem ersten und dem dritten digitalen Bild erstellt.

8. System nach einem der vorhergehenden Ansprüche, wobei der erste optische Weg (2) ein optisches Element (11) umfasst, das so eingerichtet ist, dass es einen ersten Teil (22) der ersten optischen Strahlung (60) zum ersten Sensor (7) überträgt und einen zweiten Teil (12) der ersten optischen Strahlung (60) überträgt, der der zweiten optischen Strahlung (12) entspricht, zum optischen Dimmer (90).

9. System nach Anspruch 8, umfassend eine optische Einheit (13), die das optische Element (11) und den optischen Dimmer (90) aufweist, wobei die optische Einheit (13) einteilig ist.

10. Beobachtungsverfahren, das den Empfang einer ersten optischen Strahlung (60) umfasst, die von einer zu beobachtenden Szene aus einem ersten optischen Weg (2) ausgestrahlt wird, der mit einem Hauptsensor (7) ausgestattet ist, der ein erstes digitales Bild aus der ersten optischen Strahlung (60) erstellt; Empfangen einer zweiten optischen Strahlung (12) aus der zu beobachtenden Szene von einem zweiten optischen Weg (10), der mit einem optischen Dimmer (90) mit variabler Trübung ausgestattet ist, der geeignet ist, eine Lichtintensität der zweiten optischen Strahlung (12) zu ändern; Anzeigen eines zweiten digitalen Bildes aus dem ersten digitalen Bild; und eine Beobachtung ausgehend von einem dritten optischen Weg (5) einer dritten optischen Strahlung (91), die vom optischen Dimmer (90) und vom zweiten digitalen Bild übertragen wird, **dadurch gekennzeichnet, dass** sie eine Bestimmung einer Lichtintensität von mindestens einem Pixel des ersten digitalen Bildes und eine Änderung der Trübung des optischen Dimmers (90) ausgehend von der bestimmten Lichtintensität aufweist.

## Claims

1. Observation system, comprising a first optical path (2) capable of receiving a first optical radiation (60) emitted by a scene to be observed and including a main sensor (7) configured to produce a first digital image from the first optical radiation (60); a second optical path (10) capable of receiving a second optical radiation (12) from the scene to be observed and including an optical attenuator (90) with variable opacity capable of modifying a light intensity of the second optical radiation (12); a display (4) configured to display a second digital image from the first digital image; and a third optical path (5) coupled to the display (4) and to the optical attenuator (90) and conformed to observe the second digital image and a third optical radiation (91) transmitted by the optical attenuator (90); **characterised in that** it includes an electronic control unit (92) including an image processing unit (15) configured to determine a light intensity of at least one pixel of the first digital image and **in that** the electronic control unit (92) is configured to command a variation of the opacity of the optical attenuator (90) from the determined light intensity.

2. System according to claim 1, wherein the optical attenuator (90) includes at least one liquid crystal cell.

3. System according to claim 1, wherein the optical attenuator (90) includes at least one electrochromic cell.

4. System according to any one of claims 1 to 3, wherein the optical attenuator (90) is configured to transmit the third optical radiation (91) by transparency.

5. System according to any one of claims 1 to 3, wherein the optical attenuator is configured to transmit the third optical radiation by reflection (91).

6. System according to any one of the preceding claims, wherein the electronic control unit (92) is configured to command an increase in the opacity of the optical attenuator (90) when the light intensity of said at least one pixel is greater than or equal to a threshold.

7. System according to any one of the preceding claims, comprising a fourth optical path (3) capable of receiving fourth optical radiation (70) emitted by the scene and including an additional sensor (8) configured to generate a third digital image from the fourth optical radiation (70); the image processing unit (15) being configured to generate the second digital image from a fusion between the first and third digital images.

8. System according to any one of the preceding claims, wherein the first optical path (2) comprises an optical element (11) configured to transmit a first part (22) of the first optical radiation (60) to the first sensor (7) and to transmit a second part (12) of the first optical radiation (60) corresponding to the second optical radiation (12) to the optical attenuator (90).

9. System according to claim 8, comprising an optical assembly (13) including the optical element (11) and the optical attenuator (90), the optical assembly (13) being in one piece.

10. Observation method, comprising receiving first optical radiation (60) emitted by a scene to be observed from a first optical path (2) provided with a main sensor (7) producing a first digital image from the first optical radiation (60); receiving second optical radiation (12) originating from the scene to be observed from a second optical path (10) provided with an optical attenuator (90) having a variable opacity and capable of modifying a light intensity of the second optical radiation (12); displaying a second digital image from the first digital image; and observing, from a third optical path (5), third optical radiation (91) transmitted by the optical attenuator (90), and the second digital image, **characterised in that** it includes a determination of a light intensity of at least one pixel of the first digital image and a variation in the opacity of the optical attenuator (90) from the light intensity determined.
